# EUROPEAN PATENT APPLICATION

(11) **EP 4 748 221 A1**
(43) Date of publication of application: **27.05.2026**
(21) Application number: 25171460.6
(22) Date of filing: 18.04.2025
(51) Int. Cl.: A01G 3/053

(54) **HEDGE TRIMMER**

(30) Priority: 22.11.2024 CN 202411689266
(71) Applicant: Nanjing Chervon Industry Co., Ltd., Nanjing, Jiangsu 211106 (CN)
(72) Inventor: XU, Yifan, Nanjing, Jiangsu 211106 (CN); YAMAOKA, Toshinari, Nanjing, Jiangsu 211106 (CN)
(74) Representative: Sun, Yiming

(57) **Abstract**

A hedge trimmer includes: a cutting assembly including a first blade and a second blade that reciprocates relative to the first blade along a first direction, where the first blade includes a cutting edge extending along a second direction; a motor configured to drive the cutting assembly; a housing assembly accommodating the motor; and a battery pack detachably coupled to the housing assembly. The hedge trimmer has the state of being placed on a side. When the hedge trimmer is in the state of being placed on the side, the included angle between the second direction and a horizontal plane is greater than or equal to 45 degrees and less than or equal to 90 degrees, and the battery pack is coupled to the housing assembly substantially along the second direction.

## Description

### TECHNICAL FIELD

The present application relates to the technical field of power tools and, in particular, to a hedge trimmer.

### BACKGROUND

A hedge trimmer is commonly used for trimming bushes or trees. The hedge trimmer includes a reciprocating blade assembly. A user sweeps the hedge trimmer across plants to operate the hedge trimmer to trim messy branches and leaves of the plants. Generally, the hedge trimmer using a battery as a power source requires the battery to be replaced or charged after the battery power is used up. The hedge trimmer needs to be placed on a plane, and then the battery pack is mounted or replaced from the side of the hedge trimmer. It is inconvenient for the user to mount or replace the battery pack if the battery pack has a relatively large capacity.

This part provides background information related to the present application, and the background information is not necessarily the existing art.

### SUMMARY

An object of the present application is to solve or at least alleviate part or all of the preceding problems. Therefore, an object of the present application is to provide a hedge trimmer whose battery pack is convenient to mount or replace.

To achieve the preceding object, the present application adopts the technical solutions below.

A hedge trimmer includes: a cutting assembly including a first blade and a second blade that reciprocates relative to the first blade along a first direction, where the first blade includes a cutting edge extending along a second direction; a motor configured to drive the cutting assembly; a housing assembly accommodating the motor; and a battery pack detachably coupled to the housing assembly. The hedge trimmer has the state of being placed on a side. When the hedge trimmer is in the state of being placed on the side, the included angle between the second direction and a horizontal plane is greater than or equal to 45 degrees and less than or equal to 90 degrees, and the battery pack is coupled to the housing assembly substantially along the second direction.

In some examples, the first blade extends along the first direction, and the second direction is perpendicular to the first direction.

In some examples, a battery pack coupling portion for coupling the battery pack is formed on the housing assembly, and the length of the battery pack coupling portion along the first direction and the length of the battery pack coupling portion along the second direction are not equal to each other.

In some examples, the length of the battery pack coupling portion along the second direction is greater than the length of the battery pack coupling portion along the first direction.

In some examples, the battery pack coupling portion is formed with an opening facing an environment, and the opening is configured to receive at least part of the battery pack in the second direction.

In some examples, the hedge trimmer further includes a handle assembly, where the handle assembly includes a first handle and a second handle, and in the first direction, the first handle and the second handle are located on two sides of the battery pack, respectively.

In some examples, the capacity of the battery pack is greater than or equal to 56 V.

In some examples, when the hedge trimmer is in the state of being placed on the side, the hedge trimmer includes at least three support points to support the hedge trimmer, and connecting lines between any two of the at least three support points intersect with each other.

In some examples, the hedge trimmer further includes a handle assembly, where the at least three support points are located on the handle assembly and the cutting assembly.

In some examples, the hedge trimmer further includes a handle assembly, where the at least three support points are located on the handle assembly.

In some examples, the handle assembly further includes a connector, and the second handle is connected to the hedge trimmer through the connector.

In some examples, when the hedge trimmer is in the state of being placed on the side, each of the cutting assembly, the first handle, and the connector includes at least one support point to support the hedge trimmer.

In some examples, the cutting assembly includes a leaf collector, and the leaf collector includes at least one support point to support the hedge trimmer.

In some examples, when the hedge trimmer is in the state of being placed on the side, the first handle includes at least one support point and the connector includes at least two support points to support the hedge trimmer.

In some examples, the connector includes a first connector and a second connector, the first connector is connected to the second connector, and an included angle formed by the first connector and the second connector is greater than 0 degrees and less than 180 degrees.

In some examples, a hedge trimmer includes: a cutting assembly including a first blade and a second blade that reciprocates relative to the first blade along a first direction, where the first blade includes a cutting edge extending along a second direction; a motor configured to drive the cutting assembly; a housing assembly accommodating the motor; and a battery pack coupling portion for coupling a battery pack. When the included angle between the second direction and a horizontal plane is greater than or equal to 45 degrees and less than or equal to 90 degrees, the hedge trimmer includes at least three support points to support the hedge trimmer to stand on a working plane parallel to the horizontal plane, three support points form a triangular support range, and a projection of the center of gravity of the hedge trimmer on the working plane is within the triangular support range.

In some examples, the battery pack coupling portion is formed with an opening facing an environment, and the opening is configured to receive at least part of the battery pack in the second direction.

In some examples, when the battery pack is not coupled to the battery pack coupling portion, the projection of the center of gravity of the hedge trimmer on the working plane is within the triangular support range.

In some examples, when the battery pack is coupled to the battery pack coupling portion, the projection of the center of gravity of the hedge trimmer on the working plane is within the triangular support range.

In some examples, the first blade extends along the first direction, and the distance between the center of gravity and the frontmost end of the hedge trimmer is a first distance and the distance between the center of gravity and the rearmost end of the hedge trimmer is a second distance along the first direction, where the ratio of the second distance to the first distance is higher than or equal to 0.05 and lower than or equal to 1.

In some examples, the cutting assembly abuts against the working plane or is not in contact with the working plane.

In some examples, the hedge trimmer further includes a handle assembly, the handle assembly includes a first handle, a second handle, and a connector, and the second handle is connected to the hedge trimmer through the connector.

In some examples, when the cutting assembly abuts against the working plane, each of the cutting assembly, the first handle, and the connector includes at least one support point.

In some examples, when the cutting assembly is not in contact with the working plane, the first handle includes at least one support point, and the connector includes at least two support points.

In some examples, the connector includes a first connector and a second connector, the first connector is connected to the second connector, and an included angle formed by the first connector and the second connector is greater than 0 degrees and less than 180 degrees.

The present application has the benefits below. The hedge trimmer in the present application has the state of being placed on the side. When the hedge trimmer is in the state of being placed on the side, the cutting edge of the hedge trimmer extends along the second direction that forms the included angle with the horizontal plane, where the included angle is between 45 degrees and 90 degrees. The battery pack can be coupled to the hedge trimmer along the second direction. The battery pack is enabled to be coupled to the hedge trimmer along the direction that is perpendicular to the horizontal plane or forms a certain included angle with the horizontal plane. Moreover, the weight of the battery pack also provides convenience for a user to mount or replace the battery pack.

### BRIEF DESCRIPTION OF THE DRAWINGS

FIG. 1 is a perspective view of a hedge trimmer according to an example;
FIG. 2 is a top view of the hedge trimmer in FIG. 1 including a motor;
FIG. 3 is a perspective view of the hedge trimmer in FIG. 1 including no battery pack;
FIG. 4 is a schematic view of the hedge trimmer in FIG. 1 including no battery pack and placed upright;
FIG. 5 is a schematic view showing the state of being placed on a side corresponding to the hedge trimmer in FIG. 4;
FIG. 6 is a schematic view of the hedge trimmer in FIG. 1 including a battery pack and placed upright;
FIG. 7 is a schematic view showing the state of being placed on a side corresponding to the hedge trimmer in FIG. 6;
FIG. 8 is a rear view of a hedge trimmer in the state of being placed on a side according to an example;
FIG. 9 is a rear view of a hedge trimmer in the state of being placed on a side according to another example;
FIG. 10A is a schematic diagram showing three support points of a hedge trimmer according to an example;
FIG. 10B is a schematic diagram showing three support points of a hedge trimmer and a connecting line parallel to a third direction according to an example;
FIG. 10C is a schematic diagram showing three support points of a hedge trimmer and a connecting line parallel to a first direction according to an example;
FIG. 10D is a schematic diagram showing three support points of a hedge trimmer and connecting lines parallel to a first direction and a third direction according to an example;
FIG. 11 is a schematic view of a hedge trimmer with a first handle below the center of gravity of the entire machine according to an example; and
FIG. 12 is a schematic view showing a battery pack coupling direction of a hedge trimmer perpendicular to a second direction according to an example.

### DETAILED DESCRIPTION

Before any example of the present application is explained in detail, it is to be understood that the present application is not limited to its application to the structural details and the arrangement of components set forth in the following description or illustrated in the preceding drawings.

In the present application, the terms "comprising", "including", "having", or any other variation thereof are intended to cover an inclusive inclusion such that a process, method, article, or device comprising a series of elements includes not only those series of elements, but also other elements not expressly listed, or elements inherent in the process, method, article, or device. Without further limitations, an element defined by the phrase "comprising a..." does not preclude the presence of additional identical elements in the process, method, article, or device comprising that element.

In the present application, the term "and/or" is used for describing the association relationship between associated objects, which means that there can be three kinds of relationships. For example, A and/or B may indicate that A exists alone, A and B exist simultaneously, and B exists alone. In addition, the character "/" in the present application generally indicates the "and/or" relationship between the contextual associated objects.

In the present application, the terms "connection", "combination", "coupling", and "mounting" may be direct connection, combination, coupling, or mounting and may also be indirect connection, combination, coupling, or mounting. For example, direct connection means that two members or assemblies are connected together without intermediate members, and indirect connection means that two members or assemblies are separately connected to at least one intermediate member and the two members or assemblies are connected to each other by the at least one intermediate member. In addition, "connection" and "coupling" are not limited to physical or mechanical connections or couplings and may include electrical connections or couplings.

In the present application, it is to be understood by those of ordinary skill in the art that a relative term (such as "about", "approximately", and "substantially") used in conjunction with a quantity or a condition includes a stated value and has a meaning dictated by the context. For example, the relative term includes at least a degree of error associated with the measurement of a particular value, a tolerance caused by manufacturing, assembly, and use associated with the particular value, and the like. Such a relative term should also be considered as disclosing the range defined by the absolute values of the two endpoints. The relative term may refer to that an indicated value is added or reduced by a certain percentage (such as 1%, 5%, 10%, or more). A value not modified by the relative term should also be disclosed as a particular value with a tolerance. In addition, when expressing a relative angular position relationship (for example, substantially parallel or substantially perpendicular), "substantially" may refer to that a certain degree (such as 1 degree, 5 degrees, 10 degrees, or more) is added to or subtracted from the indicated angle.

In the present application, it is to be understood by those of ordinary skill in the art that the function implemented by an assembly may be implemented by one assembly, multiple assemblies, one part, or multiple parts. Similarly, a function implemented by a part may be implemented by one part, one assembly, or a combination of parts.

In the present application, the terms "up", "down", "left", "right", "front", and "rear", and other directional words are described based on the orientation or positional relationship shown in the drawings and should not be understood as limitations to the examples of the present application. In addition, in this context, it also needs to be understood that when it is mentioned that an element is connected "above" or "under" another element, it can not only be directly connected "above" or "under" the other element but can also be indirectly connected "above" or "under" the other element through an intermediate element. It is also to be understood that the directional words such as the upper side, lower side, left side, right side, front side, and rear side not only represent perfect orientations but can also be understood as lateral orientations. For example, the lower side may include directly below, bottom left, bottom right, front bottom, and rear bottom.

Currently, some hedge trimmers need to be placed on a plane when battery packs are mounted or detached. Then, a user mounts or detaches the battery packs from the sides of the hedge trimmers. A battery pack has a certain weight. Therefore, it is inconvenient to mount or detach the battery pack from a side, thereby causing poor user experience. Based on this, the present application provides a hedge trimmer so that it is more convenient to mount and detach the battery pack in the case where the position of a battery pack coupling portion is not changed.

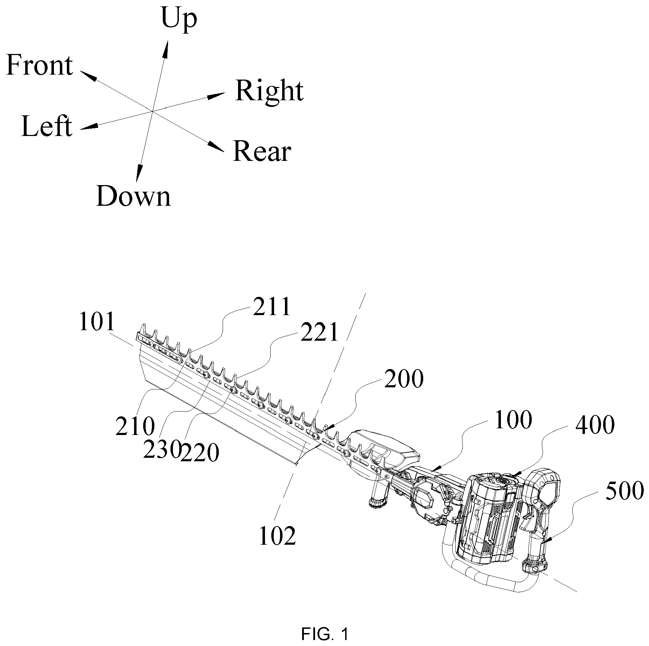

Referring to FIG. 1, the hedge trimmer provided in this example is a unidirectional hedge trimmer. The user typically walks along one direction to use the hedge trimmer. In some examples, the hedge trimmer may be a bidirectional hedge trimmer. To clearly describe technical solutions of the present application, an upper side, a lower side, a left side, a right side, a front side, and a rear side are also defined, as shown in FIG. 1.

As shown in FIGS. 1 to 3, the hedge trimmer includes a housing assembly 100, a cutting assembly 200, a motor 300, and a battery pack 400. The housing assembly 100 forms the main body of the hedge trimmer. An accommodating space may be formed in the housing assembly 100. Other components and assemblies to be described below may be connected to the housing assembly 100, supported by the housing assembly 100, and accommodated or partially accommodated in the accommodating space of the housing assembly 100. The housing assembly 100 may be separate. For example, the housing assembly 100 is formed through the combination of a left housing and a right housing. Alternatively, the housing assembly 100 may be integrated. The housing assembly 100 generally further has a grip, a handle, or the like for the user to hold.

The cutting assembly 200 is a working component of the hedge trimmer to perform a cutting operation. The cutting assembly includes a first blade 210, a second blade 220, and a blade support member 230. The first blade 210 and the second blade 220 are connected on the blade support member 230. The relative relationship between the first blade 210 and the second blade 220 is that the first blade 210 and the second blade 220 are located on the left and right sides of the hedge trimmer, respectively. The first blade 210 and the second blade 220 are mounted on the blade support member 230. The first blade 210 and the second blade 220 extend along a first direction 101 and the second blade 220 reciprocates relative to the first blade 210 along the first direction 101. As shown in FIG. 1, the first blade 210 and the second blade 220 coincide with each other on the left and right sides in this case. The first direction 101 is the front and rear direction of the hedge trimmer. The first blade 210 includes first cutting edges 211, and the second blade includes second cutting edges 221. Both the first cutting edges 211 and the second cutting edges 221 extend along a second direction 102. The second direction 102 is the up and down direction of the hedge trimmer and is perpendicular to the first direction 101.

The motor 300 is a prime mover of the hedge trimmer and may be accommodated in the accommodating space of the housing assembly 100. When the rotating shaft of the motor 300 rotates, the preceding cutting assembly 200 can be driven directly or indirectly through a transmission assembly to operate. The hedge trimmer shown in FIG. 1 is used as an example. The transmission assembly exists between the motor 300 and the cutting assembly 200. The transmission assembly may include an eccentric mechanism. The eccentric mechanism can convert the rotation of the rotating shaft of the motor 300 into the reciprocation of the first blade 210 and the second blade 220. Through the power transmission of the motor 300 and the transmission assembly, the first blade 210 and the second blade 220 move relatively to implement cutting. In some examples, the motor 300 is a direct current motor.

The battery pack 400 is detachably coupled to the housing assembly 100. A battery pack coupling portion 110 is formed on the housing assembly 100 to be coupled with the battery pack 400. The battery pack 400 can supply electrical energy to at least the motor 300 and may also power other components and assemblies or related circuits. Specifically, a driver circuit is disposed between the battery pack 400 and the motor 300. The electrical energy supplied by the battery pack 400 may be transmitted to the motor 300 by the driver circuit through a direct current bus. The capacity of the battery pack 400 is greater than or equal to 56 V, and the battery pack 400 has a relatively large capacity. Optionally, the capacity of the battery pack 400 may be 60 V. Optionally, the capacity of the battery pack 400 may be 65 V. Optionally, the capacity of the battery pack 400 may be 72 V.

The hedge trimmer further includes a handle assembly 500 for the user to hold to use or carry the hedge trimmer. The handle assembly 500 includes a first handle 510 and a second handle 520. The first handle 510 is disposed in the middle of the hedge trimmer, and the second handle 520 is disposed at the tail of the hedge trimmer. A first grip 511 is formed on the first handle 510, and a second grip 521 is formed on the second handle 520. The first grip 511 and the second grip 521 extend substantially along the second direction 102 so that it is convenient for the user to hold the first grip 511 and the second grip 521 with the left and right hands respectively to use or carry the hedge trimmer. The handle assembly 500 further includes a connector 530 for connecting the second handle 520 to the hedge trimmer. That is, the first handle 510 is directly connected to the housing assembly 100 of the hedge trimmer, and the second handle 520 is connected to the housing assembly 100 of the hedge trimmer through the connector 530. The first handle 510 is specifically connected to a front shield 120 in the housing assembly 100 of the hedge trimmer. The second handle 520 is specifically connected to a gearbox 130 in the housing assembly 100 of the hedge trimmer through the connector 530.

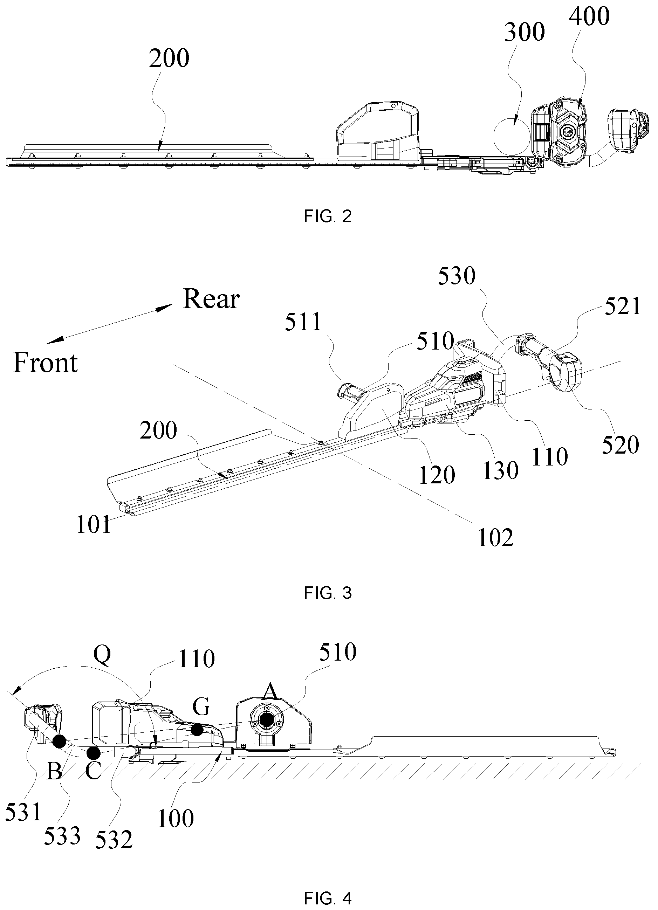

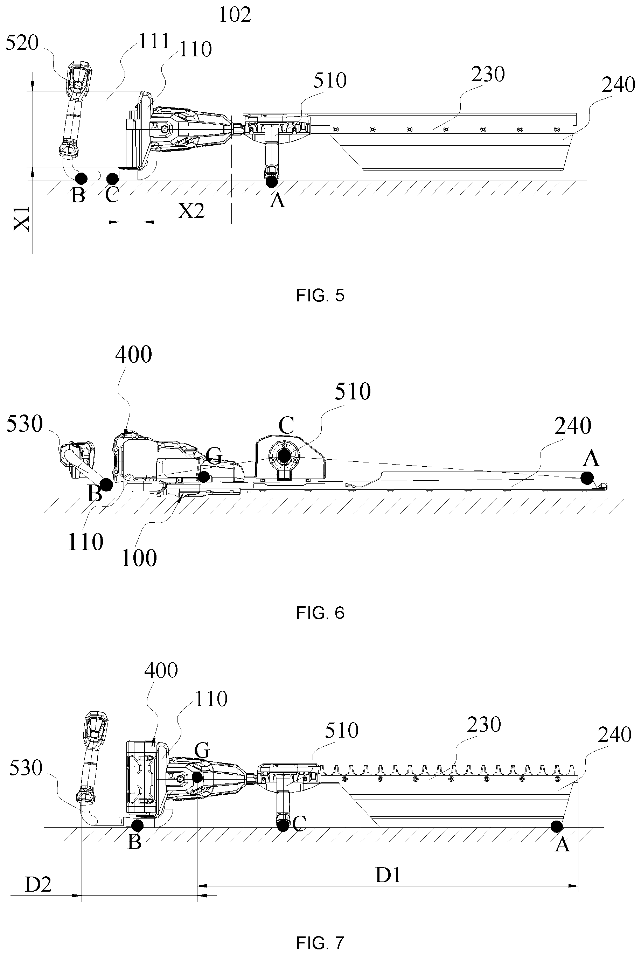

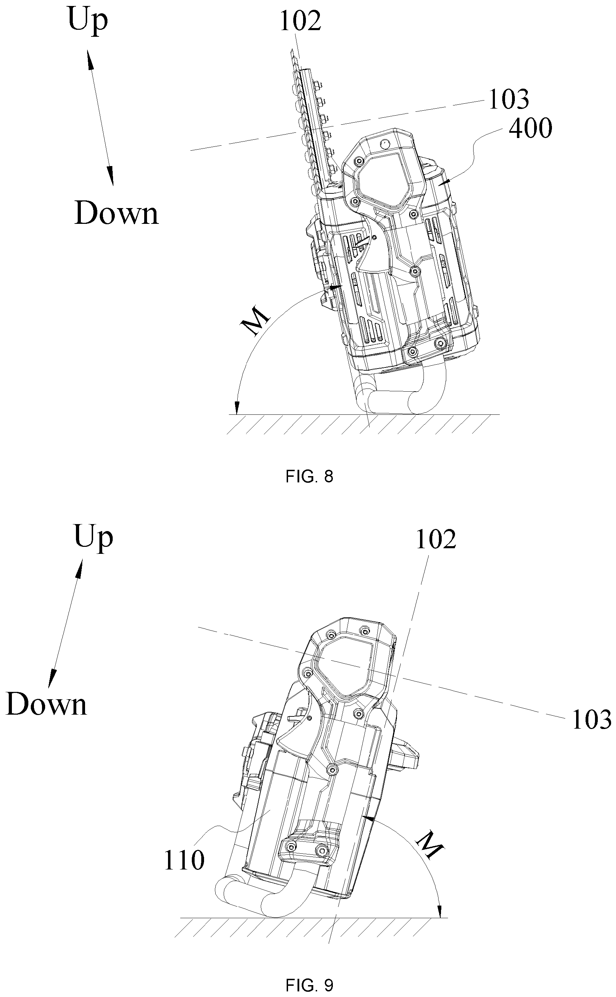

As shown in FIGS. 4 to 7, the hedge trimmer has the state of being placed upright and the state of being placed on a side on a working plane. The working plane includes a plane parallel to a horizontal plane and a plane having a certain included angle with the horizontal plane. In the present application, a specific description is performed using an example in which the working plane is the plane parallel to the horizontal plane. As shown in FIGS. 4 and 6, when the hedge trimmer is in the state of being placed upright, at least part of the housing assembly 100 is in contact with the working plane. In this case, the battery pack 400 is coupled to the battery pack coupling portion 110 on the housing assembly 100 from a side surface of the hedge trimmer substantially along a direction parallel to the working plane. As shown in FIGS. 8 and 9, when the hedge trimmer is in the state of being placed on the side, the hedge trimmer is supported to stand on the working plane. In this case, the included angle M between the second direction 102 and the working plane (that is, the horizontal plane) is greater than or equal to 45 degrees and less than or equal to 90 degrees, and the battery pack 400 is coupled to the battery pack coupling portion 110 on the housing assembly 100 substantially along the second direction 102. When the included angle between the second direction 102 and the working plane is 90 degrees, the first cutting edges 211 and the second cutting edges 221 extend upward substantially along a direction perpendicular to the working plane, and the battery pack 400 is coupled to the battery pack coupling portion 110 substantially along the direction perpendicular to the working plane. When the included angle between the second direction 102 and the working plane is less than 90 degrees, the first cutting edges 211 and the second cutting edges 221 extend toward an upper left side or an upper right side along a direction having a certain included angle with the working plane, and the battery pack 400 is coupled to the battery pack coupling portion 110 along the direction having the included angle with the working plane. Optionally, the included angle M between the second direction 102 and the working plane (that is, the horizontal plane) may be 50 degrees. Optionally, the included angle M between the second direction 102 and the working plane (that is, the horizontal plane) may be 60 degrees. Optionally, the included angle M between the second direction 102 and the working plane (that is, the horizontal plane) may be 75 degrees.

As shown in FIG. 3, in the first direction 101, the first handle 510 and the second handle 520 are located on two sides of the battery pack 400, respectively. That is, the first handle 510 is located on the front side of the battery pack 400, and the second handle 520 is located on the rear side of the battery pack 400. Thus, after the battery pack 400 is coupled to the battery pack coupling portion 110, the center of gravity of the battery pack 400 is between the two handles. Accordingly, the user holds the first handle 510 and the second handle 520 with the left and right hands respectively to use or carry the hedge trimmer more steadily and effortlessly.

As shown in FIG. 5, the battery pack coupling portion 110 is formed with an opening 111 facing an environment. The opening 111 can receive at least part of the battery pack 400 in the second direction 102. The battery pack 400 is coupled to the battery pack coupling portion 110 through the opening 111 and has portions exposed and protruding from the battery pack coupling portion 110. The opening 111 is specifically formed by the battery pack coupling portion 110 and the second handle 520, and the opening 111 faces an upper end. As shown in FIG. 7, the uppermost end of the battery pack 400 is exposed and protrudes from the battery pack coupling portion 110, and both the left and right sides of the battery pack 400 are exposed and protrude from the battery pack coupling portion 110. As shown in FIG. 5, the battery pack coupling portion 110 has a length X1 along the second direction 102 and a length X2 along the first direction 101. The length X1 and the length X2 are not equal to each other. Specifically, the length X1 is greater than the length X2. That is, the battery pack 400 is coupled to the battery pack coupling portion 110 with its relatively long side along the second direction 102. Furthermore, the user holds the first handle 510 and the second handle 520 with the left and right hands respectively to use or carry the hedge trimmer more steadily and effortlessly.

The hedge trimmer is supported to stand on the working plane when the hedge trimmer is in the state of being placed on the side, which is specifically as follows: the hedge trimmer includes at least three support points to support the hedge trimmer, and connecting lines between any two of the three support points intersect with each other, that is, the connecting lines between the three support points can form a triangle. In addition, the hedge trimmer may have four support points, five support points, six support points, or more support points to support the hedge trimmer. However, among the support points, there are always two support points farthest from each other along the first direction 101 and two support points farthest from each other along a third direction 103. The third direction 103 is a direction perpendicular to both the first direction 101 and the second direction 102 when the hedge trimmer is in the state of being placed on the side. That is, the third direction 103 is the left and right direction of the hedge trimmer. In the present application, a specific description is performed using an example in which the hedge trimmer has the three support points. The three support points are a first support point A, a second support point B, and a third support point C, respectively.

Positional relationships among the first support point A, the second support point B, and the third support point C are specifically described as follows. The specific description is performed below from the perspective corresponding to the plane in which the three support points are in contact with the working plane.

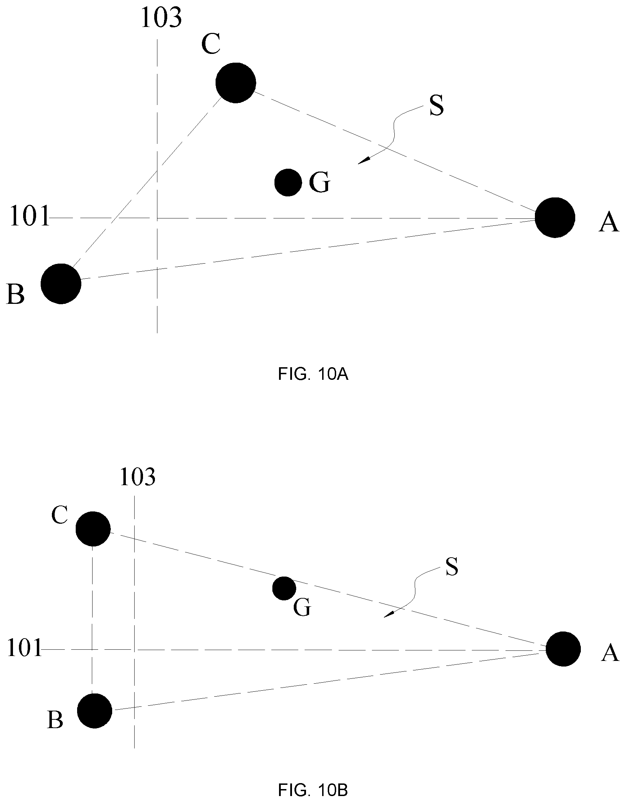

In some examples, FIG. 10A is a schematic diagram showing the positions of the three support points according to an example. The first support point A is located at the frontmost end, the second support point B is located at the rearmost end, and the third support point C is located between the two. In this case, the first support point A and the second support point B are two support points farthest from each other along the first direction 101, and the second support point B and the third support point C are two support points farthest from each other along the third direction 103.

In some examples, FIG. 10B is a schematic diagram showing the positions of the three support points according to an example. The first support point A is located at the frontmost end, the second support point B and the third support point C are both located at the rearmost end, and the connecting line between the second support point B and the third support point C is parallel to the third direction 103. In this case, the first support point A and the second support point B or the third support point C are two support points farthest from each other along the first direction 101, and the third support point C and the second support point B are two support points farthest from each other along the third direction 103.

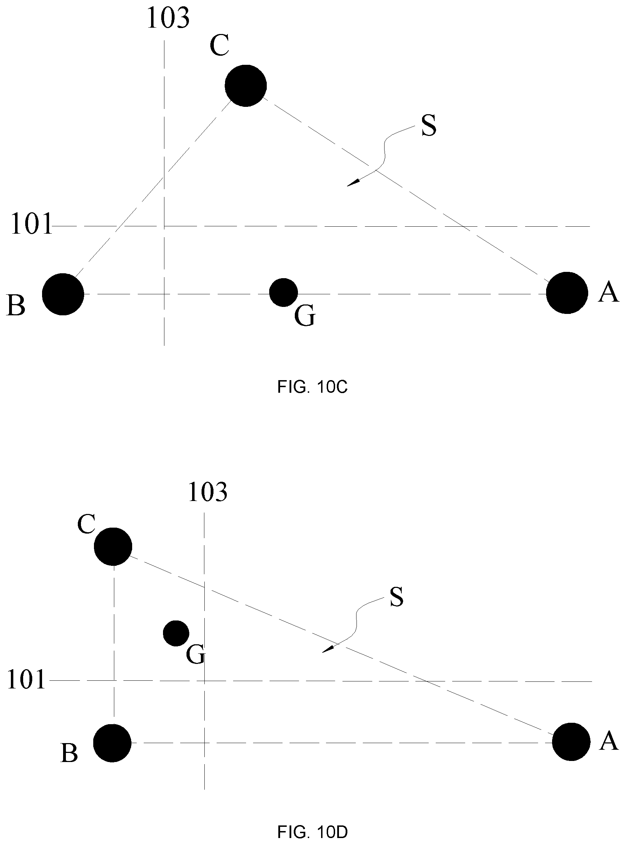

In some examples, FIG. 10C is a schematic diagram showing the positions of the three support points according to an example. The first support point A is located at the frontmost end, the second support point B is located at the rearmost end, the third support point C is located between the two, and the connecting line between the first support point A and the second support point B is parallel to the first direction 101. In this case, the first support point A and the second support point B are two support points farthest from each other along the first direction 101, and the first support point A or the second support point B and the third support point C are two support points farthest from each other along the third direction 103.

In some examples, FIG. 10D is a schematic diagram showing the positions of the three support points according to an example. The first support point A is located at the frontmost end, and the second support point B and the third support point C are both located at the rearmost end. The connecting line between the first support point A and the second support point B is parallel to the first direction 101, and the connecting line between the second support point B and the third support point C is parallel to the third direction 103. In this case, the first support point A and the second support point B or the third support point C are two support points farthest from each other along the first direction 101, and the first support point A or the second support point B and the third support point C are two support points farthest from each other along the third direction 103.

Therefore, the sides of the triangle formed by the connecting lines between the three support points may intersect with both the first direction 101 and the third direction 103. Alternatively, one side of the triangle is parallel to the first direction 101. Alternatively, one side of the triangle is parallel to the third direction 103. Alternatively, one side of the triangle is parallel to the first direction 101, and another side of the triangle is parallel to the third direction 103.

The cutting assembly 200 further includes a leaf collector 240. The leaf collector 240 is connected to a side of the blade support member 230, where the side of the blade support member 230 is not connected to the first blade 210 and the second blade 220. That is, the first blade 210 and the second blade 220 are disposed on one side of the blade support member 230, and the leaf collector 240 is disposed on the other side of the blade support member 230. In some examples, as shown in FIG. 7, when the hedge trimmer is in the state of being placed on the side, the cutting assembly 200 abuts against the working plane, that is, the leaf collector 240 abuts against the working plane. In some examples, as shown in FIG. 5, when the hedge trimmer is in the state of being placed on the side, the cutting assembly 200 is not in contact with the working plane, that is, the leaf collector 240 is not in contact with the working plane.

In some examples, when the hedge trimmer is in the state of being placed on the side and the cutting assembly 200 is not in contact with the working plane, the three support points are all located on the handle assembly 500. That is, the first handle 510 includes at least one support point, and the connector 530 includes at least two support points. As shown in FIG. 5, the first support point A is located on the first handle 510, and both the second support point B and the third support point C are located on the connector 530. FIG. 4 is a schematic view of the hedge trimmer in FIG. 5 placed upright. The positions of the first support point A, the second support point B, and the third support point C illustrated in FIG. 4 correspond to the support points in FIG. 5 that are in contact with the working plane. The connector 530 includes a first connector 531 and a second connector 532. The first connector 531 is connected to the second connector 532. An included angle Q formed by the first connector 531 and the second connector 532 is greater than 0 degrees and less than 180 degrees. That is, the first connector 531 and the second connector 532 are not in a straight line. Optionally, the second support point B and the third support point C are located on the first connector 531 and the second connector 532, respectively. Optionally, the second support point B and the third support point C are located on the first connector 531 and at the connecting point 533 of the first connector 531 and the second connector 532, respectively. Optionally, the second support point B and the third support point C are located on the second connector 532 and at the connecting point 533 of the first connector 531 and the second connector 532, respectively. The positional relationship among the first support point A, the second support point B, and the third support point C is described as the preceding multiple cases in the present application. The details are not repeated here.

In some examples, when the hedge trimmer is in the state of being placed on the side and the cutting assembly 200 abuts against the working plane, the three support points are located on the handle assembly 500 and the cutting assembly 200. That is, the cutting assembly 200, the first handle 510, and the connector 530 each include at least one support point. As shown in FIG. 7, the first support point A is located on the leaf collector 240, the second support point B is located on the connector 530, and the third support point C is located on the first handle 510. FIG. 6 is a schematic view of the hedge trimmer in FIG. 7 placed upright. The positions of the first support point A, the second support point B, and the third support point C illustrated in FIG. 6 correspond to the support points in FIG. 7 that are in contact with the working plane. The multiple positional relationships among the first support point A, the second support point B, and the third support point C are described above in the present application. The details are not repeated here. In addition, in this case, the degree of the included angle Q formed by the first connector 531 and the second connector 532 is not limited, and the first connector 531 and the second connector 532 may be or may not be on the same straight line.

When the included angle M between the second direction 102 and the working plane (that is, the horizontal plane) is greater than or equal to 45 degrees and less than or equal to 90 degrees, that is, when the hedge trimmer is in the state of being placed on the side, the first support point A, the second support point B, and the third support point C form a triangular support range S. A projection of the center of gravity G of the hedge trimmer on the working plane is within the triangular support range S. The projection of the center of gravity G of the hedge trimmer on the working plane is within the triangular support range S, which includes the following cases: the projection of the center of gravity G of the hedge trimmer on the working plane is within the triangle formed by the triangular support range S, or the projection of the center of gravity G of the hedge trimmer on the working plane is on a side of the triangle formed by the triangular support range S. The multiple positional relationships among the three support points are defined above in the present application. Then, the triangular support range S formed by the three support points corresponds to the multiple positional relationships. The details are not repeated here. FIGS. 10A to 10D are schematic diagrams showing the projection of the center of gravity G of the hedge trimmer on the working plane within the triangular support range S according to some examples.

FIG. 5 is a schematic view of the hedge trimmer supported by the three support points to be placed on the side according to an example. As shown in FIGS. 4 and 5, when the battery pack 400 is not coupled to the battery pack coupling portion 110, the three support points can support the hedge trimmer to stand stably. The projection of the center of gravity G of the hedge trimmer in FIG. 4 corresponding to FIG. 5 on the working plane is within the triangular support range S. FIG. 7 is a schematic view of the hedge trimmer supported by the three support points to be placed on the side according to an example. As shown in FIGS. 6 and 7, after the battery pack 400 is coupled to the battery pack coupling portion 110, the three support points can support the hedge trimmer to stand stably. The projection of the center of gravity G of the hedge trimmer in FIG. 6 corresponding to FIG. 7 on the working plane is also within the triangular support range S. Therefore, when the hedge trimmer is in the state of being placed on the side, regardless of whether the battery pack 400 is coupled to the battery pack coupling portion 110, the projection of the center of gravity G of the hedge trimmer on the working plane is always within the triangular support range S, and the three support points can always stably support the hedge trimmer to stand on the working plane.

In some examples, along the first direction 101, the distance between the center of gravity G of the hedge trimmer and the frontmost end of the hedge trimmer is a first distance D1, and the distance between the center of gravity G of the hedge trimmer and the rearmost end of the hedge trimmer is a second distance D2. The frontmost end of the hedge trimmer is the frontmost end of the cutting assembly 200, and the rearmost end of the hedge trimmer is the rearmost end of the second handle 520. The ratio of the second distance D2 to the first distance D1 is higher than or equal to 0.05 and lower than or equal to 1. That is, the center of gravity G of the hedge trimmer is closer to the rear end or is located in the middle of the entire machine along the first direction 101. Thus, the hedge trimmer in the state of being placed on the side can stably stand on the working plane.

In addition, as described above in the present application, the first handle 510 and the second handle 520 are disposed on the front and rear sides of the battery pack coupling portion 110, and the length X1 of the battery pack coupling portion 110 is greater than the length X2 of the battery pack coupling portion 110. The battery pack 400 is coupled to the battery pack coupling portion 110 with its relatively long side along the second direction 102, thereby further improving the stability of the hedge trimmer in the state of being placed on the side standing on the working plane.

In the present application, the structure of the cutting assembly and the structure of the handle assembly are configured (or only the structure of the handle assembly is configured). Thus, when the cutting edges of the hedge trimmer are perpendicular to the working plane or have a certain included angle with the working plane, the hedge trimmer can be supported to stand on the working plane by the cutting assembly and the handle assembly (or only the handle assembly), and the hedge trimmer is in the state of being placed on the side. Accordingly, when mounting or replacing the battery pack, the user does not need to insert the battery pack laterally from the side of the hedge trimmer like the user does when the hedge trimmer is in the state of being placed upright. When the hedge trimmer is in the state of being placed on the side, it is relatively convenient for the user to mount or replace the battery pack along a direction parallel to the extension direction of the cutting edges. That is, it is relatively convenient for the user to vertically mount or replace the battery pack along a direction perpendicular to the working plane or at a certain included angle with the working plane. In addition, mounting the battery pack to the hedge trimmer may be assisted by the gravity of the battery pack itself. For a large-capacity battery pack or in the case where the battery pack needs to be mounted or replaced multiple times, the hedge trimmer in the state of being placed on the side can greatly improve user experience.

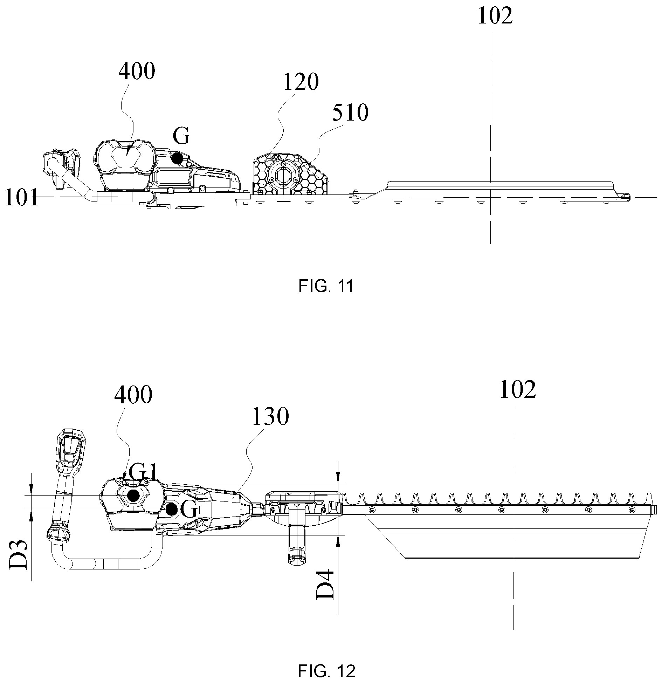

FIG. 11 shows the position of the first handle 510 relative to the center of gravity G of the entire hedge trimmer in an example. As shown in FIG. 11, in a direction parallel to the second direction 102, the first handle 510 is located below the center of gravity G of the entire hedge trimmer. In the case where the battery pack 400 is coupled to the battery pack coupling portion 110 or the battery pack 400 is not coupled to the battery pack coupling portion 110, the first handle 510 is always located below the center of gravity G of the entire hedge trimmer. In addition, the present application does not limit the position of the first handle 510 relative to the center of gravity G of the entire hedge trimmer as long as the first handle 510 is connected to the front shield 120 and is located below the center of gravity G of the entire hedge trimmer in the second direction 102.

FIG. 12 shows the hedge trimmer in an example. The direction in which the battery pack 400 of the hedge trimmer is coupled to the battery pack coupling portion 110 is perpendicular to the extension direction of each of the first blade 210 and the second blade 220. That is, the direction in which the battery pack 400 is coupled to the battery pack coupling portion 110 is perpendicular to the second direction 102. As shown in FIG. 12, the center of gravity of the battery pack 400 is G1, and the center of gravity of the entire hedge trimmer is G. In the direction parallel to the second direction 102, the distance between the center of gravity G1 of the battery pack 400 and the center of gravity G of the entire hedge trimmer is D3, and the width of the gearbox 130 is D4, where D3 is greater than 20 percent of D4. Optionally, D3 may be 23 percent of D4. Optionally, D3 may be 30 percent of D4. Optionally, D3 may be 50 percent of D4. Optionally, D3 may be greater than D4.

FIG. 12 shows an example in which the center of gravity G1 is located above the center of gravity G in the direction parallel to the second direction 102. Optionally, in the direction parallel to the second direction 102, G1 of the battery pack 400 may be located below the center of gravity G. In this case, D3 is still greater than 20 percent of D4. Optionally, the battery pack 400 may be obliquely coupled to the hedge trimmer at a certain angle. That is, the battery pack coupling portion 110 is obliquely formed on the hedge trimmer at a certain angle. In this case, D3 is still greater than 20 percent of D4. When the battery pack 400 is coupled to the battery pack coupling portion 110 disposed between the two handles, regardless of the specific position or angle of the battery pack coupling portion 110, the distance D3 between the center of gravity G1 of the battery pack 400 and the center of gravity G of the entire hedge trimmer is always greater than 20 percent of the width D4 of the gearbox 130 after the battery pack 400 is coupled to the battery pack coupling portion 110.

The basic principles, main features, and advantages of the present application are shown and described above. It is to be understood by those skilled in the art that the preceding examples do not limit the present application in any form, and any technical solutions obtained through equivalent substitutions or equivalent transformations are within the scope of the present application.

## Claims

1. A hedge trimmer, comprising:
a cutting assembly (200) comprising a first blade (210) and a second blade (220) that reciprocates relative to the first blade along a first direction (101), wherein the first blade comprises a cutting edge (211) extending along a second direction (102);
a motor (300) configured to drive the cutting assembly;
a housing assembly (100) accommodating the motor; and
a battery pack (400) detachably coupled to the housing assembly;
wherein the hedge trimmer has a state of being placed on a side, an included angle (M) between the second direction and a horizontal plane is greater than or equal to 45 degrees and less than or equal to 90 degrees when the hedge trimmer is in the state of being placed on the side, and the battery pack is coupled to the housing assembly substantially along the second direction.

2. The hedge trimmer according to claim 1, wherein the first blade extends along the first direction, and the second direction is perpendicular to the first direction.

3. The hedge trimmer according to claim 1, wherein a battery pack coupling portion (110) for coupling the battery pack is formed on the housing assembly, and a length (X2) of the battery pack coupling portion along the first direction and a length (X1) of the battery pack coupling portion along the second direction are not equal to each other.

4. The hedge trimmer according to claim 3, wherein the length of the battery pack coupling portion along the second direction is greater than the length of the battery pack coupling portion along the first direction.

5. The hedge trimmer according to claim 3, wherein the battery pack coupling portion is formed with an opening (111) configured to receive at least part of the battery pack in the second direction.

6. The hedge trimmer according to claim 1, further comprising a handle assembly (500), wherein the handle assembly comprises a first handle (510) and a second handle (520), and in the first direction, the first handle and the second handle are located on two sides of the battery pack, respectively.

7. The hedge trimmer according to claim 1, wherein a capacity of the battery pack is greater than or equal to 56 V.

8. The hedge trimmer according to claim 1, wherein when the hedge trimmer is in the state of being placed on the side, the hedge trimmer comprises at least three support points (A, B, C) to support the hedge trimmer, and connecting lines between any two of the at least three support points intersect with each other.

9. The hedge trimmer according to claim 8, further comprising a handle assembly (500), wherein the at least three support points are located on the handle assembly and the cutting assembly.

10. The hedge trimmer according to claim 8, further comprising a handle assembly (500), wherein the at least three support points are located on the handle assembly.

11. The hedge trimmer according to claim 6, wherein the handle assembly further comprises a connector (530), and the second handle is connected to the hedge trimmer through the connector.

12. The hedge trimmer according to claim 11, wherein when the hedge trimmer is in the state of being placed on the side, each of the cutting assembly, the first handle, and the connector comprises at least one support point to support the hedge trimmer.

13. The hedge trimmer according to claim 12, wherein the cutting assembly comprises a leaf collector (240), and the leaf collector comprises at least one support point to support the hedge trimmer.

14. The hedge trimmer according to claim 11, wherein when the hedge trimmer is in the state of being placed on the side, the first handle comprises at least one support point and the connector comprises at least two support points to support the hedge trimmer.

15. The hedge trimmer according to claim 14, wherein the connector comprises a first connector (531) and a second connector (532), the first connector is connected to the second connector, and an included angle formed by the first connector and the second connector is greater than 0 degrees and less than 180 degrees.
